# EUROPÄISCHE PATENTSCHRIFT

(11) **EP 4 170 622 B1**
(45) Veröffentlichungstag und Bekanntmachung des Hinweises auf die Patenterteilung: **23.04.2025**
(21) Anmeldenummer: 21204600.7
(22) Anmeldetag: 25.10.2021
(51) Int. Cl.: G08G 1/01, H04W 4/90, H04W 4/40, G07C 5/00, G07C 5/08, G08G 1/017, H04L 9/32, H04L 9/00, H04L 9/40, H04W 4/44

(54) **VERFAHREN ZUR SPEICHERUNG UND AUSWERTUNG VON INNERHALB EINES V2X-NETZWERKS ERFASSTEN STATUSINFORMATIONEN**
METHOD FOR STORING AND EVALUATING STATUS INFORMATION DETECTED WITHIN A V2X NETWORK
PROCÉDÉ DE MÉMORISATION ET D'ÉVALUATION DES INFORMATIONS D'ÉTAT COLLECTÉES AU SEIN D'UN RÉSEAU V2X

(43) Veröffentlichungstag der Anmeldung: 26.04.2023
(73) Patentinhaber: VOLKSWAGEN AG, 38440 Wolfsburg (DE)
(72) Erfinder: Köstermann, Janis, 10557 Berlin (DE); Hoppmann, Hendrik, 38110 Braunschweig (DE); Voltmer, Jörg, 30559 Hannover (DE)

(56) Entgegenhaltungen:
- US-A1- 2020 307 480
- US-A1- 2020 394 905
- US-A1- 2021 304 592

## Beschreibung

Die Erfindung betrifft ein Verfahren zur Speicherung und Auswertung von innerhalb eines V2X-Netzwerks erfassten Statusinformationen sowie eine für die Durchführung des Verfahrens eingerichtete Infrastruktureinheit, Road Side Unit, RSU, bzw. einen Server. Die Erfindung betrifft ferner ein entsprechendes Verfahren eines Fahrzeugs innerhalb eines V2X-Netzwerks sowie ein für die Durchführung des Verfahrens eingerichtetes Fahrzeug.

Heutige Fahrzeuge erfassen über eine Vielzahl von Sensoren Statusinformationen, die den aktuellen Betriebszustand des Fahrzeugs oder auch relevante Umgebungsparameter betreffen. So können beispielsweise Fahrtdaten, wie Geschwindigkeit oder Lenkwinkel, als das Fahrzeug betreffende Statusinformationen erfasst werden. Auch können die Statusinformationen eine Eigenschaft, bspw. eine Situation, Absicht, oder Besonderheit, eines Insassen des Fahrzeugs oder einer durch das Fahrzeug transportierten Ladung betreffen. Diese Statusinformationen werden im Rahmen des vernetzen Fahrens als sogenannte V2X (vehicle-to-X)- oder C2X (carto-X)-Nachrichten an andere Mitglieder des V2X-Netzwerks gesendet, insbesondere an andere Fahrzeuge.

Beispielsweise kann ein Fahrzeug als Statusinformation aussenden, dass der Insasse des Fahrzeugs als Arzt auf dem Weg zu einem Patienten ist. Damit sind andere Verkehrsteilnehmer informiert und können auf diese besondere Situation reagieren, obwohl das Fahrzeug von außen als privater PKW nicht besonders erkennbar ist. In einem anderen Anwendungsbeispiel kann ein Fahrer, der zerbrechliche Fracht transportiert, andere Verkehrsteilnehmer über eine entsprechende Statusinformation darauf hinweisen. Diese können dann vorhersehen, dass das die Statusinformation aussende Fahrzeug eine gewisse Fahrgeschwindigkeit nicht überschreiten oder nicht überholen wird, und können rechtzeitig reagiere, beispielsweise langsam aber frühzeitig abbremsen. Auch könnte beispielsweise vor Fahranfängern oder Fahrschulen gewarnt werden.

Die von den Fahrzeugen des V2X-Netzwerks ausgesendeten Statusinformationen sind zudem im Falle eines irregulären Ereignisses, wie eines Unfalls, von besonderer Bedeutung. So könnte basierend auf den Statusinformationen der an dem Unfall beteiligten oder den Unfall beobachtenden Fahrzeuge der Unfallhergang rekonstruiert werden. Dies kann insbesondere helfen, zu klären, welcher Verkehrsteilnehmer den Unfall verursacht hat. Hierfür kann relevant sein, ob ein Fahrzeug die anderen Verkehrsteilnehmer darüber über eine eventuelle besondere Eigenschaft informiert hat, beispielsweise dass es eine zerbrechliche Fracht transportiert.

Eine Rekonstruktion des Unfallhergangs erfordert die Zuordnung der Statusinformationen zu den einzelnen Fahrzeugen. Dies ist jedoch mit gewissen Schwierigkeiten verbunden, das V2X-Botschaften stark anonymisiert sind. So überträgt ein Fahrzeug seine Statusinformationen zwar üblicherweise gemeinsam mit einem Identifier. Dieser Identifier wechselt jedoch ständig und lässt sich nicht auf ein bestimmtes Fahrzeug zurückführen. So wird, aus datenschutzrechtlichen Gründen, das Erstellen von Bewegungsprofilen verhindert. Bei Auftreten eines irregulären Ereignisses, wie eines Unfalls, kann daher allerdings auch keine Zuordnung der Statusinformationen zu den einzelnen Fahrzeugen erfolgen.

Eine denkbare Lösung liegt darin, mit den Statusinformationen stets einen das jeweilige Fahrzeug eindeutig kennzeichnenden Identifier zu übersenden. Dies würde jedoch dem Datenschutzgedanken zuwiderlaufen und wäre in einigen Jurisdiktionen aus eben diesem Grunde nicht zulässig, da somit Bewegungsprofile erstellt werden könnten. Alternativ könnten die Statusinformationen im Fahrzeug selbst dauerhaft aufgezeichnet werden. Damit wäre zumindest die Zuordnung der Statusinformationen zu dem jeweiligen Fahrzeug sichergestellt. Bei einem Unfall könnten diese Statusinformationen dann ausgelesen werden. Dies ist jedoch aufwändig und könnte im Übrigen auch das Erstellen eines Bewegungsprofils ermöglichen.

US 2021/304592 A1 beschreibt ein Verfahren zur Unfallanalyse, wobei zunächst ein Unfall erkannt wird, an dem ein erstes Fahrzeug beteiligt ist, und anschließend Ereignisdaten in Bezug auf den Unfall von einem zweiten Fahrzeug gesammelt werden.

Der Erfindung liegt nun die Aufgabe zugrunde, den Stand der Technik zu bereichern und ein Verfahren zur Speicherung und Auswertung von innerhalb eines V2X-Netzwerks erfassten Statusinformationen vorzuschlagen, welches unter Einhaltung hoher Datenschutzanforderungen eine Zuordnung der Statusinformationen zu den einzelnen Fahrzeugen zumindest bei Auftreten eines irregulären Ereignisses ermöglicht.

Die Erfindung löst die Aufgabe durch Verfahren gemäß Anspruch 1 und durch eine Infrastruktureinheit bzw. einen Server gemäß Anspruch 14. Vorteilhafte Ausgestaltungen sind Gegenstand der abhängigen Ansprüche, der Beschreibung sowie der Figuren. Zu den einzelnen Aspekten der Erfindung gemachte Erläuterungen gelten entsprechend für die anderen Aspekte der Erfindung.

Ein erster Aspekt der Erfindung betrifft ein Verfahren zur Speicherung und Auswertung von innerhalb eines V2X-Netzwerks erfassten Statusinformationen. Dabei wird erfindungsgemäß ein Satz von Statusinformationen zumindest einem der an dem irregulären Ereignis beteiligten Fahrzeuge anhand eines Vergleichs der Statusinformationen und der Fahrzeuginformationen zugeordnet. Dies erlaubt eine datenschutzkonforme Zuordnung von Statusinformationen zu einzelnen an einem irregulären Ereignis beteiligten Fahrzeugen, insbesondere kann auf einen eindeutigen Identifier verzichtet werden. Eine Datenzuordnung wird vielmehr nur nachträglich bei Auftreten eines irregulären Ereignisses wie eines Unfalls durchgeführt. Die fortlaufende, vorsorgliche Speicherung kann komplett anonymisiert bleiben. Dies wird im Weiteren im Detail erläutert.

In einem ersten Schritt des erfindungsgemäßen Verfahrens werden Statusinformationen einer Vielzahl von Fahrzeugen empfangen, insbesondere von einer Road Side Unit, RSU, als Infrastruktureinheit oder einem Server. Die RSU und/oder der Server können eine entsprechende Kommunikationseinheit aufweisen. Die Statusinformationen können, wie bereits erwähnt, den aktuellen Betriebszustand des Fahrzeugs oder auch relevante Umgebungsparameter betreffen. Die Statusinformationen können sich beispielsweise auf mindestens eine Eigenschaft eines Insassen des Fahrzeugs, einer Ladung des Fahrzeugs oder auf eine Eigenschaft des Fahrzeugs selbst beziehen, wie noch erläutert wird. Insbesondere können Fahrzeugdaten, wie Geschwindigkeit, Lenkwinkel, Fahrrichtung, Position des Fahrzeugs, solche Statusinformationen bilden. Die Statusinformationen können durch in dem V2X-Netzwerk befindliche Fahrzeuge erfasst und gesendet werden. Eine Eigenschaft eines Insassen des Fahrzeugs kann beispielsweise sein, dass der Insasse ein Notarzt ist, der mit einem privaten PKW auf dem Weg zu einem Notfalleinsatz ist. So kann eine Statusinformation "Arzt im Einsatz" generiert und an andere Fahrzeuge übermittelt werden, sodass diese besondere Vorsicht walten lassen können. Entsprechend könnte ein Fahrzeug darauf hinweisen, dass es zerbrechliche Last transportiert. Somit können für eine spätere Zuordnung ggf. relevante Informationen bei der RSU und/oder dem Server vorliegen. Eine Kommunikation im V2X-Netzwerk und insbesondere die Übertragung der Statusinformationen kann beispielsweise via WlanP oder Cellular V2X erfolgen. Dies ist besonders effizient, insbesondere bei einer direkten Verbindung zwischen zwei Netzwerkteilnehmern.

In einem zweiten Schritt werden die empfangenen Statusinformationen in einer Speichereinheit in anonymisierter Form aufgezeichnet. Die RSU und/oder der Server kann eine solche Speichereinheit aufweisen. Die aufgezeichneten Statusinformationen können zyklisch gelöscht werden. Entsprechend kann die Speichereinheit als Ringspeicher ausgebildet sein. Zu jedem Fahrzeug kann ein zu diesem Fahrzeug gehörender Satz von Statusinformationen aufgezeichnet werden. Die Aufzeichnung der Statusinformationen erfolgt anonymisiert. Die aufgezeichneten Statusinformationen sind also anonymisierte Statusinformationen. Anonymisiert bedeutet dabei, dass die Statusinformationen keinen eindeutigen Identifier aufweisen, der die Statusinformationen dem zugehörigen Fahrzeug zuordnet. Bevorzugt werden die Statusinformationen bereits in der anonymisierten Form empfangen, werden also von den Fahrzeugen bereits anonymisiert versendet. Besonders bevorzugt werden die Statusinformationen von den jeweiligen Fahrzeugen auch anonym erfasst, also ohne Zuweisung eines solchen Identifiers. Mit anderen Worten sind die Statusinformationen insofern anonymisiert, dass weder die Statusinformationen selbst sowie eventuelle weitere empfangene Daten eine eindeutige Fahrzeug-ID umfassen, die eine unmittelbare Zuordnung der Daten zu dem sendenden Fahrzeug ermöglichen würde. Insbesondere können somit keine Bewegungsprofile erstellt und keine unmittelbaren Rückschlüsse auf die Person des Fahrers gezogen werden. Es wird somit ein hohes Level an Datenschutz gewährt.

In einem dritten Schritt werden Fahrzeuginformationen zu an einem irregulären Ereignis, insbesondere an einem Unfall, beteiligten Fahrzeugen erfasst oder empfangen. Die Fahrzeuginformationen sind dabei insbesondere das irreguläre Ereignis, also beispielsweise den Unfall, betreffende Informationen. Im Folgenden wird als irreguläres Ereignis insbesondere ein Unfall diskutiert, worauf die Offenbarung jedoch nicht beschränkt ist. Die Fahrzeuginformationen können beispielsweise den Zeitpunkt und/oder Ort des irregulären Ereignisses, Geschwindigkeits- oder Fahrtrichtungsänderungen, Endpositionen und/oder Fahrtrichtung einzelner, am irregulären Ereignis beteiligter Fahrzeuge aufweisen. Die Fahrzeuginformationen können zumindest teilweise identisch zu den Statusinformationen sein, können also eine Teilmenge der Statusinformationen bilden. Es können Fahrzeuginformationen empfangen werden, die von an dem Unfall beteiligten Fahrzeugen ausgesendet werden. Beispielsweise kann ein an dem Unfall beteiligtes Fahrzeug mitteilen, dass es in einen Unfall verwickelt war und kann zumindest eine Teilmenge der kurz vor dem Unfall, beispielsweise in den letzten 15 Sekunden vor dem Unfall, erfassten Statusinformationen als Fahrzeuginformationen senden. Auch können Fahrzeuginformationen der an dem Unfall beteiligten Fahrzeuge beispielsweise durch die RSU selbst erfasst werden. So kann die RSU entsprechende Sensoren aufweisen, beispielsweise eine auf eine Kreuzung gerichtete Kamera, die einen Unfall auf der Kreuzung aufnimmt. Auch kann die RSU auf diesem Wege einen Unfall selbst erkennen. Es liegen somit Informationen zu dem Unfall vor.

In einem vierten Schritt wird zumindest ein Satz von Statusinformationen zumindest einem der an dem irregulären Ereignis beteiligten Fahrzeuge anhand eines Vergleichs der Statusinformationen und der Fahrzeuginformationen zugeordnet. Es können mehrere, insbesondere alle, vorliegenden Sätze von Statusinformationen zu jeweils einem an dem irregulären Ereignis beteiligten Fahrzeug zugeordnet werden. Der Satz von Statusinformationen bezeichnet dabei eine Menge an Statusinformationen, die zu einem einzelnen Fahrzeug gehören bzw. durch dieses erfasst worden sind. Im ersten Schritt des Verfahrens werden insbesondere mehrere solcher Sätze von Statusinformationen empfangen, wie erwähnt, da diese jedoch anonymisiert gespeichert werden, sind diese Sätze keinen spezifischen Fahrzeugen zuordenbar. Wie die Erfinder erkannt haben, ist eine Zuordnung dennoch möglich, nämlich basierend auf einem Vergleich der Statusinformationen und der Fahrzeuginformationen. Als Ergebnis des Vergleichs ist der Satz, insbesondere jeder Satz, von aufgezeichneten Statusinformationen zu jeweils einem an dem Unfall beteiligten Fahrzeug zugeordnet. Das Ergebnis des Vergleichs kann also für jedes an dem irregulären Ereignis beteiligte Fahrzeug ein Satz von Statusinformationen sein, der dem jeweiligen Fahrzeug zugeordnet ist. Mit anderen Worten wird durch diesen Vergleich zwischen den Statusinformationen und den Fahrzeuginformationen der Satz von Statusinformationen zu dem jeweiligen Fahrzeug, dem der Satz von Statusinformationen entstammt, zugeordnet. Es erfolgt somit eine mittelbare Zuordnung von Statusinformationen zu einem bestimmten Fahrzeug via Vergleich der Fahrzeuginformationen mit den Statusinformationen, also eine Zuordnung von Statusinformationen zu dem jeweiligen Fahrzeug ohne Rückgriff auf einen, erfindungsgemäß nicht vorliegenden eindeutigen Identifier, was einer unmittelbaren Zuordnung entspräche. Beispielsweise könnten die Statusinformationen mit Format X, Header: "Ich bin eine Statusinformation"; Body: "Datenelement1, DE2, DE3, ...., DEn", übermittelt werden. Zum Identifizieren der relevanten Statusinformationen wäre dann eine Untermenge der Datenelemente ausreichend. Diese Untermenge sind die Fahrzeuginformationen, beispielsweise mit Format Y, Header: "Ich bin eine Fahrzeuginformation von Fahrzeug A"; Body: DE3, DE7, DE11, DE12. Durch Vergleich der Fahrzeuginformationen mit den Statusinformationen ist ein Satz von Statusinformationen, die zum Fahrzeug A gehören, also Statusinfo(Fahrzeug A), ermittelbar. Dies wird nachfolgend anhand von Beispielen erläutert.

Beispielsweise können als Fahrzeuginformationen die Endpositionen und die Fahrtrichtungen der an dem Unfall beteiligten Fahrzeuge vorliegen, entweder empfangen von den am Unfall beteiligten Fahrzeugen selbst oder erfasst durch die RSU. Als Satz von Statusinformationen kann beispielsweise die Geschwindigkeit, der Lenkwinkel, und die Fahrrichtung eines der an dem Unfall beteiligten Fahrzeuge vorliegen. Durch den erfindungsgemäßen Vergleich kann nun darauf rückgeschlossen werden, welcher Satz von Statusinformationen zu welchem Fahrzeug gehört. So passt die Endposition und die Fahrtrichtung, die das Fahrzeug kurz vor dem Unfall hatte, im Idealfall nur zu einem Satz von Statusinformationen, also nur zu einer spezifischen Kombination von Geschwindigkeit, Lenkwinkel, und Fahrrichtung. Damit kann auf das Unfallgeschehen rückgeschlossen werden, zumindest solange alle oder wenigstens einzelne, an dem Ereignis beteiligte Fahrzeuge am Unfallort verblieben sind. Auch können sowohl die Fahrzeuginformationen als auch die Statusinformationen spezifische Fahrzeugeigenschaften umfassen, wie z.B. die Länge des Fahrzeugs. Bei einem Unfall zwischen zwei Fahrzeugen unterschiedlicher Länge ist somit zweifelsfrei feststellbar, welcher Datensatz zu welchem Unfallbeteiligten gehört. Es werden so auf Grundlage des Vergleichs zwischen den einzelnen Sätzen von Statusinformationen mit den Fahrzeuginformationen Rückschlüsse auf die an dem Ereignis beteiligten Fahrzeuge gezogen und der Unfall kann rekonstruiert werden. Nach der erfolgten Zuordnung kann eine Auswertung des Unfallhergangs erfolgen, also insbesondere eine Klärung der Schuldfrage erfolgen. Hier kann beispielsweise einfließen, ob ein am Unfall beteiligtes Fahrzeug eine relevante Eigenschaft des Insassen, wie "Arzt im Einsatz", oder der Ladung, wie zerbrechliche Ladung, als Statusinformation mitgeteilt hat oder nicht.

In vorteilhafter Weise kann die Erfindung realisiert werden ohne die heute im Einsatz befindlichen Standards (inkl. der Implementierung in Fahrzeugen) zu ändern. Die Umsetzung kann insbesondere vollständig in RSUs stattfinden und kann auch für Bestandsfahrzeuge funktionieren und zwar ohne Kompromisse beim Datenschutz eingehen zu müssen. So werden durch den Verzicht auf die Verwendung eines eindeutigen Identifiers hohe Anforderungen an den Datenschutz gewahrt. Eine Datenzuordnung wird erfindungsgemäß nur nachträglich bei Auftreten eines Unfalls/Crashs durchgeführt. Die fortlaufende, vorsorgliche Speicherung bleibt komplett anonymisiert. Die Erfindung ermöglicht trotz Einhaltung dieser hohen Datenschutzanforderungen eine nachträgliche Zuordnung der Daten, also der Statusinformationen, zu dem jeweiligen Fahrzeug, allerdings nur bei Auftreten eines irregulären Ereignisses, wie eines Unfalls. Bei einem solchen Ereignis kann es gerechtfertigt sein, beispielsweise zur Klärung der Schuldfrage, von den hohen Datenschutzanforderungen abzuweichen.

Nach einer Ausgestaltung wird das Verfahren zumindest abschnittsweise in einer Infrastruktureinheit, Road Side Unit, RSU, oder einem Server durchgeführt. Wie bereits erwähnt, können in dem ersten Schritt des Verfahrens die Statusinformationen von einer RSU empfangen werden. Die RSU kann die Daten an einen Server weiterleiten. Auch können die Daten grundsätzlich unmittelbar an den Server übermittelt werden. Das Aufzeichnen der Daten kann entsprechend in einer Speichereinheit der RSU und/oder des Servers erfolgen. Selbiges gilt für die im dritten Schritt empfangenen Fahrzeuginformationen. Ist im dritten Schritt ein Erfassen der Fahrzeuginformationen vorgesehen, kann dies insbesondere über die RSU erfolgen, beispielsweise über eine Kamera der RSU, wie erwähnt. Die im vierten Schritt durchgeführte Zuordnung kann entsprechend durch eine Steuereinheit der RSU und/oder des Servers erfolgen. Das Verfahren kann somit insbesondere außerhalb eines Fahrzeugs durchgeführt werden. Bei einer derartigen zentralen Datenverarbeitung müssen nur die RSU bzw. der Server entsprechend ausgelegt sein, beispielsweise über eine entsprechende Programmierung und Rechenkapazität verfügen, was effizienter ist.

Nach einer bevorzugen Ausgestaltung betreffen die Statusinformationen den Betrieb von Fahrzeugen innerhalb eines vorbestimmten Zeitraums vor dem irregulären Ereignis und/oder werden von an dem irregulären Ereignis beteiligten Fahrzeugen empfangen. Die Statusinformationen können dauerhaft empfangen werden, insbesondere die Statusinformationen aller Fahrzeuge des Netzwerks. Es kann jedoch, wie erwähnt, eine regelmäßige Löschung vorgesehen sein solange kein irreguläres Ereignis eintritt. Tritt ein solchen Ereignis ein, können die zuletzt empfangenen Statusinformationen dauerhaft gespeichert bleiben, um eine Auswertung derselben zu ermöglichen. In diesem Sinne können die Statusinformationen den Betrieb von Fahrzeugen innerhalb eines vorbestimmten Zeitraums vor dem irregulären Ereignis betreffen. Auch kann vorgesehen sein, dass die Statusinformationen von an dem irregulären Ereignis beteiligten Fahrzeugen empfangen werden, insbesondere die Statusinformationen innerhalb eines vorbestimmten Zeitraums vor dem irregulären Ereignis. So sind für die Auswertung des Unfallgeschehens zumeist nicht sämtliche Statusinformationen der vor dem Unfall liegenden Fahrt von Bedeutung. Gemäß dieser Ausgestaltung werden lediglich die innerhalb eines vorbestimmten Zeitraums vor dem irregulären Ereignis liegenden Statusinformationen dem Verfahren zugrunde gelegt, was effizienter ist und zudem auch datenschutzrechtlich von Vorteil, da weiter zurückliegende Daten nicht verwendet werden.

Nach einer Ausgestaltung des Verfahrens werden in Reaktion auf das Erfassen oder Empfangen der Fahrzeuginformationen Statusinformationen eines oder mehrere Fahrzeuge angefordert. Dieser Verfahrensschritt kann insbesondere von der RSU und/oder dem Server durchgeführt werden. Werden Fahrzeuginformationen und damit die Information, dass ein irreguläres Ereignis aufgetreten ist, empfangen, werden nach dieser Ausgestaltung die Statusanfragen weiterer Fahrzeuge des V2X-Netzwerks abgefragt, insbesondere die Statusinformationen von nicht unmittelbar an dem Ereignis/Unfall beteiligter Fahrzeuge. So können auch die Statusinformationen beispielsweise der den Unfall passierenden Fahrzeuge relevant sein für die Aufklärung des Unfallgeschehens. Bei einer Auswertung des Unfallgeschehens können auch diese Statusinformationen zu Rate gezogen werden.

Nach einer Ausgestaltung betreffen die Statusinformationen eine Eigenschaft eines Insassen des Fahrzeugs, einer Ladung des Fahrzeugs oder des Fahrzeugs. Nach einer diesbezüglichen Ausgestaltung weisen die das Fahrzeug betreffenden Statusinformationen Fahrtdaten, wie Geschwindigkeit, Lenkwinkel, Bremsaktivierung, Blinkeraktivierung, Daten zu einem ausgewählten Fahrmodus und/oder Umwelteinstellungen auf, wie bereits erwähnt. So kann es, wie bereits erwähnt, für das Verfahren sowie die spätere Auswertung des Unfallgeschehens von Relevanz sein, ob ein am Unfall beteiligtes Fahrzeug eine relevante Eigenschaft des Insassen, wie "Arzt im Einsatz", oder der Ladung, wie zerbrechliche Ladung, als Statusinformation mitgeteilt hat oder nicht. Sollte dies mitgeteilt worden sein, könnte ein eventuelles verkehrsgefährdendes Verhalten des Insassen anders beurteilt werden. Entsprechendes kann gelten, sollte eine Ladung als verkehrsrelevant gekennzeichnet worden sein. Für die Zuordnung können zudem Fahrtdaten wie Geschwindigkeit und Lenkwinkel von Relevanz sein, wie ebenfalls bereits erläutert. So passen mögliche Fahrzeuginformationen, wie die Endposition und die Fahrtrichtung, die das Fahrzeug kurz vor dem Unfall hatte, im Idealfall nur zu einem Satz von Statusinformationen, also nur zu einer spezifischen Kombination von bspw. Geschwindigkeit und Lenkwinkel. So weisen nach einer Ausgestaltung die Fahrzeuginformationen den Zeitpunkt und/oder Ort des irregulären Ereignisses, Geschwindigkeits- oder Fahrtrichtungsänderungen, Endpositionen und/oder Fahrtrichtung einzelner, am irregulären Ereignis beteiligter Fahrzeuge auf. Den Fahrzeuginformationen selbst kann entnehmbar sein, dass ein irreguläres Ereignis eingetreten ist. Auch kann die Information über den Eintritt des irregulären Ereignisses in einer gemeinsamen Nachricht mit den Fahrzeuginformationen empfangen werden oder unabhängig von den Fahrzeuginformationen. Somit kann in einfacher Weise das erfindungsgemäße Verfahren ausgelöst werden.

Nach einer Ausgestaltung werden die aufgezeichneten Statusinformationen zyklisch gelöscht, sofern keine Fahrzeuginformationen empfangen oder erfasst werden. Die insbesondere in der Speichereinheit der RSU und/oder des Servers aufgezeichneten Statusinformationen werden nach dieser Ausgestaltung also nur dann dauerhaft gespeichert, wenn Fahrzeuginformationen empfangen oder erfasst werden, wenn also ein irreguläres Ereignis auftritt. Die Speichereinheit kann, wie erwähnt, hierfür als Ringspeicher ausgebildet sein, bei dem gespeicherte Daten kontinuierlich überschrieben werden. Sollte ein irreguläres Ereignis eintreten, können die Statusinformationen in einem Dauerspeicher überführt werden, der Teil der Speichereinheit sein kann. Nach Erhalt der Fahrzeuginformationen bleibt dann zumindest der letzte Datenzyklus erhalten, beispielsweise die letzten 15 Sekunden vor dem Unfall. So kann Speicherplatz sowie Rechenkapazität gespart werden. Zudem ist es dem Datenschutz zuträglich, Daten nur zu speichern, wenn diese zur Auswertung des irregulären Ereignisses benötigt werden.

Nach einer Ausgestaltung wird der Satz von Statusinformationen in einer Blockchain gespeichert. Insbesondere kann auch das Ergebnis des erfindungsgemäßen Vergleichs, also die Zuordnung des Satzes von Statusinformationen zu einem Fahrzeug, in der Blockchain gespeichert werden. Damit werden die für die Auswertung des Unfalls wichtigen Daten, deren Auswertung unter anderem auch strafrechtliche Konsequenzen haben kann, in fälschungssicherer Weise gespeichert.

Ein zweiter Aspekt der Erfindung betrifft ein Verfahren eines Fahrzeug innerhalb eines V2X-Netzwerks. Das Verfahren wird von einem Fahrzeug des V2X-Netzwerks im Zusammenspiel mit dem bereits erläuterten, insbesondere durch eine RSU und/oder einen Server durchgeführten Verfahren, durchgeführt. Bezüglich der nachfolgenden Erläuterungen zu dem zweiten Aspekt der Erfindung wird auch auf die Erläuterungen zu dem ersten Aspekt der Erfindung verwiesen.

In einem ersten Schritt des Verfahrens werden das Fahrzeug betreffende Statusinformationen erfasst. Hierzu kann das Fahrzeug über ein oder mehrere Sensoren oder auch über Eingabegeräte verfügen, beispielsweise zur Eingabe von Eigenschaften des Fahrzeugführers, eines anderen Insassen oder der Ladung. Bevorzugt werden die Statusinformationen in anonymisierter Form erfasst, es wird den Statusinformationen insbesondere kein das Fahrzeug eindeutig kennzeichnender Identifier zugeordnet. Die Statusinformationen können in einer Speichereinheit des Fahrzeugs zumindest zwischengespeichert werden.

In einem zweiten Schritt werden die erfassten Statusinformationen an eine RSU und/oder einen Server des V2X-Netzwerks mittels einer ersten Nachricht übermittelt, wobei die RSU bzw. der Server die Statusinformationen anonymisiert speichert. Die erste Nachricht kann die RSU bzw. den Server entsprechend zur Aufzeichnung der Statusinformationen in anonymisierter Form veranlassen. Die Übermittlung kann auch mittelbar über die RSU an den Server erfolgen. Das Übermitteln kann auch hier via WlanP oder Cellular V2X erfolgen. Nach Übermittlung der Statusinformationen kann der Zwischenspeicher des Fahrzeugs geleert werden. Nach einer Ausgestaltung erfolgt bereits die Übermittlung der Statusinformationen in anonymisierter Form an die RSU und/oder den Server. Dies ist datenschutzrechtlich besonders sicher.

In einem dritten Schritt ermittelt das Fahrzeug das Auftreten eines irregulären Ereignisses unter Beteiligung des Fahrzeugs. Hierzu kann auf die Sensoren des Fahrzeugs zurückgegriffen werden. Insbesondere kann eine spontane Änderung von Statusinformationen, beispielsweise der Geschwindigkeit oder eines Lenkwinkels des Fahrzeugs selbst, als Auftreten eines irregulären Ereignisses interpretiert werden. Die Beteiligung des Fahrzeugs kann eine unmittelbare Beteiligung sein, bei der das Fahrzeug beispielsweise selbst einen Schaden davonträgt, aber auch eine mittelbare, bei der das Fahrzeug einen Unfall eines anderen Fahrzeugs des V2X-Netzwerks beobachtet. So können nach einer Ausgestaltung die Fahrzeuginformationen ein anderes Fahrzeug betreffen. Das Fahrzeug erfasst dabei Fahrzeuginformationen und assoziiert diese mit dem irregulären Ereignis, also insbesondere dem Unfall. So kann das Fahrzeug, sollte es an dem Unfall unmittelbar beteiligt sein, beispielsweise seine Endposition und seine Fahrrichtung kurz vor dem Unfall als Fahrzeuginformationen mit dem Unfall assoziieren.

In einem vierten Schritt werden diese Fahrzeuginformationen an eine RSU und/oder einen Server des V2X-Netzwerks übermittelt zum Zuordnen eines Satzes von Statusinformationen zu einem an dem irregulären Ereignis beteiligten Fahrzeug anhand eines Vergleichs der Statusinformationen und der Fahrzeuginformationen. Es können mehrere, insbesondere alle, vorliegenden Sätze von Statusinformationen zu jeweils einem an dem irregulären Ereignis beteiligten Fahrzeug zugeordnet werden. Die Übermittlung kann mittels einer zweiten Nachricht erfolgen. Die zweite Nachricht kann die RSU bzw. den Server entsprechend zum Zuordnen eines Satzes von Statusinformationen zu den an dem irregulären Ereignis beteiligten Fahrzeugen anhand eines Vergleichs der Statusinformationen und der Fahrzeuginformationen veranlassen. Dabei kann insbesondere, sollte das Fahrzeug selbst unmittelbar an dem Unfall beteiligt gewesen sein, auch der ihm entstammende Satz von Statusinformationen dem Fahrzeug in der oben bereits erläuterten Weise trotz anonymisierter Daten zugeordnet werden. Die Übermittlung der Fahrzeuginformationen kann ebenso erfolgen wie die bereits erläuterte Übermittlung der Statusinformationen. Gemäß dem Verfahren erfasst und übermittelt also das Fahrzeug Statusinformationen sowie, bei Auftreten eines irregulären Ereignisses, Fahrzeuginformationen, die eine Zuordnung des zu dem Fahrzeug gehörenden Satzes von Statusinformationen zu diesem Fahrzeug trotz der anonymisierten Daten ermöglichen.

Hinsichtlich der Zuordnung wird auch die obigen Erläuterungen zu dem ersten Aspekt verwiesen.

Ein dritter Aspekt der Erfindung betrifft ein Computerprogramm, enthaltend Anweisungen, die, wenn sie von einer Steuereinheit einer RSU durchgeführt werden, die RSU veranlassen, das Verfahren nach dem ersten Aspekt der Erfindung durchzuführen. Auch betrifft der dritte Aspekt der Erfindung ein Computerprogramm, enthaltend Anweisungen, die, wenn sie von einer Steuereinheit eine Servers durchgeführt werden, den Server veranlassen, das Verfahren nach dem ersten Aspekt der Erfindung durchzuführen. Ein vierter Aspekt der Erfindung betrifft ein Computerprogramm, enthaltend Anweisungen, die, wenn sie von einer Steuereinheit eines Fahrzeugs durchgeführt werden, dieses veranlassen, das Verfahren nach dem zweiten Aspekt durchzuführen. Das Computerprogramm ist also zum Durchführen der erfindungsgemäßen Verfahren ausgebildet.

Ein fünfter Aspekt der Erfindung betrifft eine Infrastruktureinheit, Road Side Unit, RSU, oder einen Server in einem V2X-Netzwerk. Die RSU und/oder der Server sind zum Durchführen des Verfahrens nach dem ersten Aspekt ausgebildet. Die RSU und/oder der Server weisen eine Kommunikationseinheit zur Datenkommunikation innerhalb des V2X-Netzwerks, eine Speichereinheit zum Aufzeichnen von Daten, sowie eine Steuereinheit auf. Die Steuereinheit ist dazu eingerichtet, die Kommunikationseinheit zum Empfangen von Statusinformationen einer Vielzahl von Fahrzeugen anzusteuern, die empfangenen Statusinformationen in der Speichereinheit in anonymisierter Form aufzuzeichnen, Fahrzeuginformationen zu an einem irregulären Ereignis beteiligten Fahrzeugen zu erfassen oder zu empfangen, und zumindest einem der an dem irregulären Ereignis beteiligten Fahrzeuge anhand eines Vergleichs der Statusinformationen und der Fahrzeuginformationen einen Satz von Statusinformationen zuzuordnen. Hinsichtlich weiterer Details wird auf die Erläuterungen zu den anderen Aspekten der Erfindung verwiesen, die entsprechend auch für diesen Aspekt gelten.

Ein sechster Aspekt der Erfindung betrifft ein Fahrzeug in einem V2X-Netzwerk, wobei das Fahrzeug folgendes aufweist: eine Kommunikationseinheit zur Datenkommunikation innerhalb des V2X-Netzwerks, eine Sensoreinheit zum Erfassen von Statusinformationen und Fahrzeuginformationen, eine Steuereinheit, die dazu eingerichtet ist die Sensoreinheit zum Erfassen von das Fahrzeug betreffenden Statusinformationen und Fahrzeuginformationen anzusteuern, die Kommunikationseinheit zum Übermitteln der erfassten Statusinformationen an eine Infrastruktureinheit, Road Side Unit, RSU, oder einen Server des V2X-Netzwerks mittels einer ersten Nachricht anzusteuern, ein irreguläres Ereignis unter Beteiligung des Fahrzeugs zu ermitteln, und die Kommunikationseinheit zum Übermitteln von mit dem irregulären Ereignis assoziierten Fahrzeuginformationen an eine Infrastruktureinheit, Road Side Unit, RSU, oder einen Server des V2X-Netzwerks anzusteuern zum Zuordnen zumindest eines Satzes von Statusinformationen zu zumindest einem an dem irregulären Ereignis beteiligten Fahrzeug anhand eines Vergleichs der Statusinformationen und der Fahrzeuginformationen. Hinsichtlich weiterer Details wird auf die Erläuterungen zu den anderen Aspekten der Erfindung verwiesen, die entsprechend auch für diesen Aspekt gelten.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: eine schematische Darstellung einer Verkehrssituation mit einem Unfall als irregulärem Ereignis in einer Ansicht von oben;
- Figur 2: eine schematische Darstellung der Kommunikation zwischen erfindungsgemäßen Fahrzeugen und einer erfindungsgemäßen RSU nach dem erfindungsgemäßen Verfahren;
- Figur 3: eine schematische Darstellung eines erfindungsgemäßen Verfahrens, durchgeführt von einer RSU, gemäß einer Ausgestaltung;
- Figur 4: eine schematische Darstellung eines erfindungsgemäßen Verfahrens, durchgeführt von einem Fahrzeug, gemäß einer Ausgestaltung;
- Figur 5: eine schematische Darstellung der für die Erfindung relevanten Elemente einer erfindungsgemäßen RSU; und
- Figur 6: eine schematische Darstellung der für die Erfindung relevanten Elemente eines erfindungsgemäßen Fahrzeugs.

Soweit nichts anderes angegeben ist, bezeichnen gleiche Bezugszeichen gleiche Gegenstände.

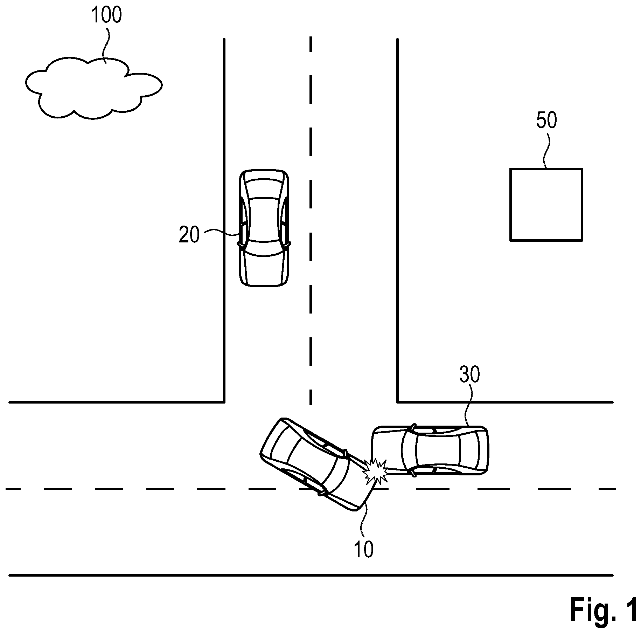

Figur 1 zeigt eine Verkehrssituation an einer Kreuzung mit einem ersten Fahrzeug 10, einem zweiten Fahrzeug 20 und einem dritten Fahrzeug 30. Das erste Fahrzeug 10 ist in diesem Beispiel beim Abbiegen von seiner Fahrbahn abgekommen und mit dem dritten Fahrzeug 30 kollidiert, die Fahrzeuge 10, 30 sind also unmittelbar an einem Unfall als irregulärem Ereignis beteiligt. Das zweite Fahrzeug 20 ist nicht unmittelbar in den Unfall verwickelt, hat diesen allerdings beobachtet. Die Fahrzeuge 10, 20, 30 haben während ihrer Fahrt Statusinformationen, insbesondere Fahrdaten wie Geschwindigkeit, Lenkwinkel, Bremsaktivierung, und/oder Blinkeraktivierung, über fahrzeugeigene Sensoren erfasst und an eine Road Side Unit, RSU, 50 mittels einer kabellosen Datenübertragung übermittelt, wobei die RSU 50, bzw. nach Weiterleitung ein Server 100, die empfangenen Statusinformationen in einer Speichereinheit in anonymisierter Form aufgezeichnet hat. Zu jedem der Fahrzeuge liegt somit ein Satz von Statusinformationen vor. Da die Statusinformationen anonymisiert sind, ist allerdings nicht bekannt, welcher Satz von Statusinformationen zu welchem Fahrzeug gehört. Eine Zuordnung der Statusinformationen zu den jeweiligen am Unfall beteiligten Fahrzeugen ist zur Aufklärung des Unfallgeschehens jedoch erforderlich. Hier setzt die Erfindung an, wie im Folgenden erläutert wird.

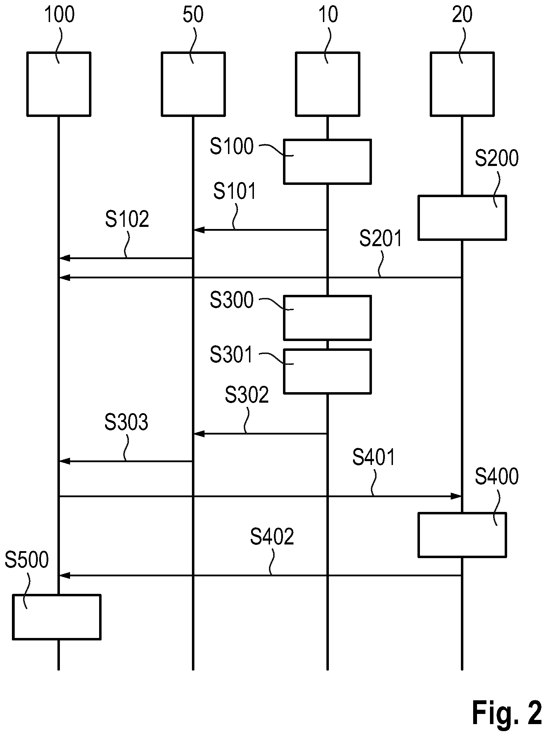

Figur 2 zeigt eine schematische Darstellung der Kommunikation zwischen den Fahrzeugen 10, 20 und der RSU 50 nach dem erfindungsgemäßen Verfahren zur Speicherung und Auswertung von innerhalb eines V2X-Netzwerks erfassten Statusinformationen. Figur 2 zeigt einen Server 100, eine RSU 50, das erste Fahrzeug 10 und das zweite Fahrzeug 20. In S100 erstellt das Fahrzeug 10 erste Statusinformationen und sendet diese in S101, S102 via RSU 50 an den Server 100.

In Schritt S200 erstellt das Fahrzeug 20 zweite Statusinformationen und sendet diese direkt an den Server 100. RSU 50 und Server 100 zeichnen diese Statusinformationen in einem hier nicht dargestellten Schritt in ihren Speichereinheiten auf, wobei eine zyklische Löschung der Daten vorgesehen sein kann.

In S300 stellt das Fahrzeug 10 ein irreguläres Ereignis fest, nämlich den in Figur 1 ersichtlichen Unfall unter eigener Beteiligung, und ermittelt in S301 mit dem Ereignis assoziierte erste Fahrzeuginformationen, beispielsweise eigene Trajektorieinformationen vor dem Unfall, und sendet diese in S302, S303 via RSU 50 an den Server 100. Ebenso kann das Fahrzeug 20, das ebenfalls unmittelbar an dem Unfall beteiligt ist, in entsprechender Weise Fahrzeuginformationen and die RSU 50 und/oder den Server 100 übermitteln.

In S401 fragt der Server 100 weitere Fahrzeuginformationen an, beispielsweise mit einer Rundfunk-Nachricht mit Informationen zu Unfallzeit und -ort und der Anfrage nach weiteren Informationen. Das Fahrzeug 20 empfängt diese Nachricht, stellt fest, dass es zur Unfallzeit nahe des Unfallorts war, und erstellt in Schritt S400 zweite Fahrzeuginformationen, beispielsweise anhand von Außensensordaten und zu anderen beteiligten Fahrzeugen. In Schritt S402 sendet das zweite Fahrzeug 20 diese Informationen an den Server 100, beispielsweise via ein Mobilfunknetzwerk.

In Schritt S500 vergleicht der Server 100 alle Statusinformationen mit den empfangenen Fahrzeuginformationen zum Ermitteln, welcher der dem Server 100 nun vorliegenden Sätze von Statusinformationen zu welchem der an dem Unfall beteiligten Fahrzeuge gehört. Es erfolgt somit, trotz der anonymisierten Speicherung der Daten, eine Zuordnung insbesondere des vom ersten Fahrzeug 10 stammenden ersten Satzes von Statusinformationen zu dem ersten Fahrzeug 10 und des vom dritten Fahrzeug 30 stammenden zweiten Satzes von Statusinformationen zu dem dritten Fahrzeug 30.

Die Erfindung erlaubt es somit lediglich anonymisiert vorliegende Statusinformationen zumindest bei Auftreten eines irregulären Ereignisses, wie eines Unfalls, dem jeweiligen Fahrzeug zuzuordnen, von dem sie stammen. Eine solche Zuordnung ist bislang nur mittels eines eindeutigen Identifiers möglich, auf den erfindungsgemäß aus Datenschutzgründen jedoch gerade verzichtet werden soll. Die Erfindung erlaubt damit trotz allgemein datenschutzkonformer Verarbeitung der Statusinformationen eine Zuordnung der Statusinformationen zu dem jeweiligen Fahrzeug bei Auftreten eines Unfalls, bei welchem die Aufklärung der Ursachen- und Schuldfrage den Schutz der Daten der Beteiligten überwiegen mag.

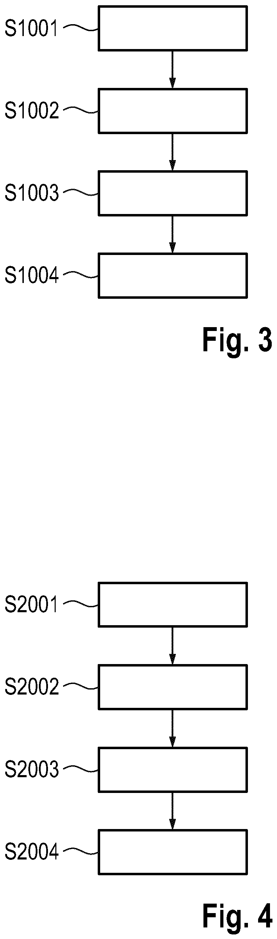

Figur 3 zeigt schematisch das erfindungsgemäße Verfahren zur Speicherung und Auswertung von innerhalb eines V2X-Netzwerks erfassten Statusinformationen mittels der RSU 50 bzw. des Servers 100, wobei in einem ersten Schritt S1001 Statusinformationen einer Vielzahl von Fahrzeugen empfangen durch die RSU 50 bzw. den Server 100 werden, in einem zweiten Schritt S1002 die empfangenen Statusinformationen in einer Speichereinheit der RSU 50 bzw. des Servers 100 in anonymisierter Form aufgezeichnet werden, in einem dritten Schritt S1003 durch die RSU 50 bzw. den Servers 100 Fahrzeuginformationen zu an einem irregulären Ereignis beteiligten Fahrzeugen erfasst oder empfangen und in einem vierten Schritt S1004 durch eine Steuereinheit der RSU 50 bzw. des Servers 100 zumindest ein Satz von Statusinformationen zu zumindest einem an dem irregulären Ereignis beteiligten Fahrzeug anhand eines Vergleichs der Statusinformationen und der Fahrzeuginformationen zugeordnet wird.

Figur 4 zeigt schematisch das erfindungsgemäße Verfahren eines der Fahrzeuge 10, 20, 30 innerhalb eines V2X-Netzwerks, wobei in einem ersten Schritt S2001 das Fahrzeug 10, 20, 30 betreffende Statusinformationen erfasst werden, in einem zweiten Schritt S2002 die erfassten Statusinformationen an die RSU 50 und/oder den Server 100 des V2X-Netzwerks mittels einer ersten Nachricht zur Aufzeichnung in anonymisierter Form übermittelt werden, in Schritt S2003 ein irreguläres Ereignis unter Beteiligung des jeweiligen Fahrzeugs 10, 30 ermittelt wird, und in Schritt 2004 mit dem irregulären Ereignis assoziierte Fahrzeuginformationen an die RSU 50 und/oder den Server 100 des V2X-Netzwerks übermittelt werden, zum Zuordnen eines Satzes von Statusinformationen zu den an dem irregulären Ereignis beteiligten Fahrzeugen 10, 20, 30 anhand eines Vergleichs der Statusinformationen und der Fahrzeuginformationen.

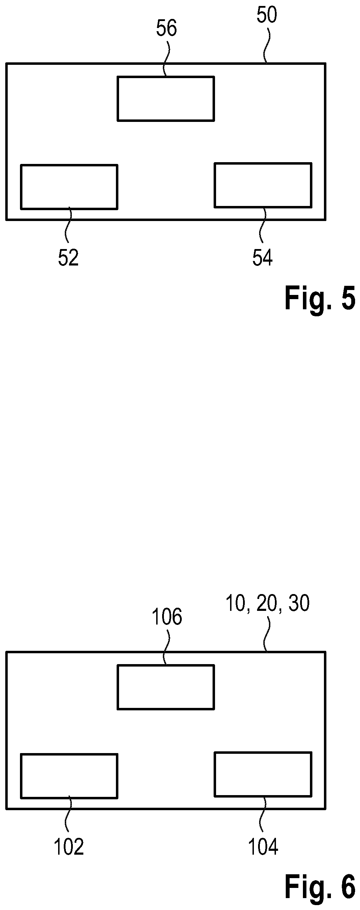

Figur 5 zeigt schematisch die RSU 50 mit ihren für das erfindungsgemäße Verfahren wesentlichen Elementen. Die RSU 50 umfasst eine Kommunikationseinheit 52 zur Datenkommunikation innerhalb des V2X-Netzwerks, eine Speichereinheit 54 zum Aufzeichnen von Daten, eine Steuereinheit 56, die dazu eingerichtet ist, die Kommunikationseinheit 52 zum Empfangen von Statusinformationen einer Vielzahl von Fahrzeugen 10, 20, 30 anzusteuern, die empfangenen Statusinformationen in der Speichereinheit 54 in anonymisierter Form aufzuzeichnen, Fahrzeuginformationen zu an einem irregulären Ereignis beteiligten Fahrzeugen 10, 20, 30 zu erfassen oder zu empfangen, und den an dem irregulären Ereignis beteiligten Fahrzeugen 10, 30 anhand eines Vergleichs der Statusinformationen und der Fahrzeuginformationen einen Satz von Statusinformationen zuzuordnen. Alternativ oder zusätzlich kann auch der Server 100 entsprechend ausgebildet sein.

Figur 6 zeigt schematisch die für das erfindungsgemäße Verfahren wesentlichen Elementen der Fahrzeuge 10, 20, 30. Die Fahrzeuge 10, 20, 30 umfassen eine Kommunikationseinheit 102 zur Datenkommunikation innerhalb des V2X-Netzwerks, eine Sensoreinheit 104 zum Erfassen von Statusinformationen und Fahrzeuginformationen, eine Steuereinheit 106, die dazu eingerichtet ist die Sensoreinheit 104 zum Erfassen von das Fahrzeug 10, 20, 30 betreffenden Statusinformationen und Fahrzeuginformationen anzusteuern, die Kommunikationseinheit 102 zum Übermitteln der erfassten Statusinformationen die RSU 50 oder den Server 100 mittels einer ersten Nachricht anzusteuern, ein irreguläres Ereignis unter Beteiligung des Fahrzeugs 10, 20, 30 zu ermitteln, und die Kommunikationseinheit 102 zum Übermitteln von mit dem irregulären Ereignis assoziierten Fahrzeuginformationen an die RSU 50 oder den Server 100 anzusteuern zum Zuordnen eines Satzes von Statusinformationen zu zumindest einem der an dem irregulären Ereignis beteiligten Fahrzeuge 10, 20, 30 anhand eines Vergleichs der Statusinformationen und der Fahrzeuginformationen.

### Bezugszeichenliste

- 10: erstes Fahrzeug
- 20: zweites Fahrzeug
- 30: drittes Fahrzeug
- 50: RSU
- 52: Kommunikationseinheit
- 54: Speichereinheit
- 56: Steuereinheit
- 102: Kommunikationseinheit
- 104: Sensoreinheit
- 106: Steuereinheit
- S101-S402: Verfahrensschritte
- S1001-S1004: Verfahrensschritte
- S2001-S2004: Verfahrensschritte

## Patentansprüche

1. Verfahren zur Speicherung und Auswertung von innerhalb eines V2X-Netzwerks erfassten Statusinformationen, das Verfahren aufweisend die Schritte:
• Empfangen (S1001) von Statusinformationen einer Vielzahl von Fahrzeugen (10, 20, 30),
• Aufzeichnen (S1002) der empfangenen Statusinformationen in einer Speichereinheit (54) in anonymisierter Form unter Verzicht auf einen eindeutigen Identifier, der die Statusinformationen dem zugehörigen Fahrzeug zuordnet,
• Erfassen oder Empfangen (S1003) von Fahrzeuginformationen zu an einem irregulären Ereignis beteiligten Fahrzeugen (10, 20, 30),
• Zuordnen (S1004) eines Satzes von Statusinformationen zu einem der an dem irregulären Ereignis beteiligten Fahrzeuge (10, 20, 30) anhand eines Vergleichs der Statusinformationen und der Fahrzeuginformationen.

2. Verfahren nach Anspruch 1, wobei das Verfahren zumindest abschnittsweise in einer Infrastruktureinheit, Road Side Unit, RSU (50), oder einem Server (100) durchgeführt wird.

3. Verfahren nach Anspruch 1 oder 2, wobei die Statusinformationen den Betrieb von Fahrzeugen (10, 20, 30) innerhalb eines vorbestimmten Zeitraums vor dem irregulären Ereignis betreffen und/oder von an dem irregulären Ereignis beteiligten Fahrzeugen (10, 20, 30) empfangen werden.

4. Verfahren nach einem der vorhergehenden Ansprüche, wobei in Reaktion auf das Erfassen oder Empfangen der Fahrzeuginformationen Statusinformationen von einem oder mehreren Fahrzeugen (20) angefordert werden.

5. Verfahren nach einem der vorhergehenden Ansprüche, wobei die Statusinformationen eine Eigenschaft eines Insassen des Fahrzeugs, einer Ladung des Fahrzeugs oder des Fahrzeugs (10, 20, 30) betreffen.

6. Verfahren nach Anspruch 5, **dadurch gekennzeichnet, dass** die das Fahrzeug (10, 20, 30) betreffenden Statusinformationen Fahrtdaten, wie Geschwindigkeit, Lenkwinkel, Bremsaktivierung, Blinkeraktivierung, Daten zu einem ausgewählten Fahrmodus und/oder Umwelteinstellungen aufweisen.

7. Verfahren nach einem der vorhergehenden Ansprüche, wobei die Fahrzeuginformationen den Zeitpunkt und/oder Ort des irregulären Ereignisses, Geschwindigkeits- oder Fahrtrichtungsänderungen, Endpositionen und/oder Fahrtrichtung einzelner, am irregulären Ereignis beteiligter Fahrzeuge (10, 20, 30) aufweisen.

8. Verfahren nach einem der vorhergehenden Ansprüche, wobei die aufgezeichneten Statusinformationen zyklisch gelöscht werden, sofern keine Fahrzeuginformationen empfangen oder erfasst werden.

9. Verfahren nach einem der vorhergehenden Ansprüche, wobei der Satz von Statusinformationen in einer Blockchain gespeichert wird.

10. Verfahren eines Fahrzeugs innerhalb eines V2X-Netzwerks, in dem das Verfahren nach den Ansprüchen 1-9 ausgeführt wird, das Verfahren aufweisend
die Schritte:
• Erfassen (S2001) von das Fahrzeug (10, 20, 30) betreffenden Statusinformationen,
• Übermitteln (S2002) der erfassten Statusinformationen an eine Infrastruktureinheit, Road Side Unit, RSU (50), oder einen Server (100) des V2X-Netzwerks mittels einer ersten Nachricht zur Aufzeichnung in anonymisierter Form unter Verzicht auf einen eindeutigen Identifier, der die Statusinformationen dem zugehörigen Fahrzeug zuordnet,
• Ermitteln (S2003) eines irregulären Ereignisses unter Beteiligung des Fahrzeugs (10, 20, 30), und
• Übermitteln (S2004) von mit dem irregulären Ereignis assoziierten Fahrzeuginformationen an eine Infrastruktureinheit, Road Side Unit, RSU (50), oder einen Server (100) des V2X-Netzwerks zum Zuordnen eines Satzes von Statusinformationen zu einem an dem irregulären Ereignis beteiligten Fahrzeug (10, 20, 30) anhand eines Vergleichs der Statusinformationen und der Fahrzeuginformationen.

11. Verfahren nach Anspruch 10, wobei die Statusinformationen in anonymisierter Form an die RSU (50) oder den Server (100) übermittelt werden.

12. Verfahren nach Anspruch 10 oder 11, wobei die Fahrzeuginformationen ein anderes Fahrzeug (10, 30) betreffen.

13. Computerprogramm, enthaltend Anweisungen, die, wenn sie von einer Steuereinheit (56) einer Infrastruktureinheit, Road Side Unit, RSU (50), oder eines Server (100) durchgeführt werden, diese veranlassen, das Verfahren nach einem der Ansprüche 1 bis 9 durchzuführen oder enthaltend Anweisungen, die, wenn sie von einer Steuereinheit (106) eines Fahrzeugs (10, 20, 30) durchgeführt werden, dieses veranlassen, das Verfahren nach Anspruch 10, 11 oder 12 durchzuführen.

14. Infrastruktureinheit, Road Side Unit, RSU (50), oder Server (100) in einem V2X-Netzwerk, aufweisend:
• eine Kommunikationseinheit (52) zur Datenkommunikation innerhalb des V2X-Netzwerks,
• eine Speichereinheit (54) zum Aufzeichnen von Daten,
• eine Steuereinheit (56), die dazu eingerichtet ist:
o die Kommunikationseinheit (52) zum Empfangen von Statusinformationen einer Vielzahl von Fahrzeugen (10, 20, 30) anzusteuern,
o die empfangenen Statusinformationen in der Speichereinheit (54) in anonymisierter Form unter Verzicht auf einen eindeutigen Identifier, der die Statusinformation dem zugehörigen Fahrzeug zuordnet, aufzuzeichnen,
o Fahrzeuginformationen zu an einem irregulären Ereignis beteiligten Fahrzeugen (10, 20, 30) zu erfassen oder zu empfangen, und
o zumindest einem der an dem irregulären Ereignis beteiligten Fahrzeuge (10, 20, 30) anhand eines Vergleichs der Statusinformationen und der Fahrzeuginformationen einen Satz von Statusinformationen zuzuordnen.

15. Fahrzeug (10, 20, 30) in einem V2X-Netzwerk, das eine Infraktureinheit, Road Side Unit, RSU (50), oder Server (100) nach Anspruch 14 umfasst, aufweisend:
• eine Kommunikationseinheit (102) zur Datenkommunikation innerhalb des V2X-Netzwerks,
• eine Sensoreinheit (104) zum Erfassen von Statusinformationen und Fahrzeuginformationen,
• eine Steuereinheit (106), die dazu eingerichtet ist:
o die Sensoreinheit (104) zum Erfassen von das Fahrzeug (10, 20, 30) betreffenden Statusinformationen und Fahrzeuginformationen anzusteuern,
o die Kommunikationseinheit (102) zum Übermitteln der erfassten Statusinformationen an eine Infrastruktureinheit, Road Side Unit, RSU (50), und/oder einen Server (100) des V2X-Netzwerks mittels einer ersten Nachricht anzusteuern,
o ein irreguläres Ereignis unter Beteiligung des Fahrzeugs (10, 20, 30) zu ermitteln, und
o die Kommunikationseinheit (102) zum Übermitteln von mit dem irregulären Ereignis assoziierten Fahrzeuginformationen an die RSU (50) und/oder den Server (100) des V2X-Netzwerks anzusteuern zum Zuordnen eines Satzes von Statusinformationen zu zumindest einem der an dem irregulären Ereignis beteiligten Fahrzeuge (10, 20, 30) anhand eines Vergleichs der Statusinformationen und der Fahrzeuginformationen.

## Claims

1. Method for storing and evaluating status information gathered within a V2X network, the method comprising the steps:
• receiving (S1001) status information from a plurality of vehicles (10, 20, 30),
• recording (S1002) the received status information in a storage unit (54) in an anonymized form without a unique identifier assigning the status information to the associated vehicle,
• gathering or receiving (S1003) vehicle information on vehicles involved in an irregular event (10, 20, 30),
• assigning (S1004) a set of status information to one of the vehicles (10, 20, 30) involved in the irregular event based on a comparison of the status information and the vehicle information.

2. Method according to claim 1, wherein the method is carried out at least partially in an infrastructure unit, a road side unit, RSU (50), or a server (100).

3. Method according to claim 1 or claim 2, wherein the status information relates to the operation of vehicles (10, 20, 30) within a predetermined period of time before the irregular event and/or is received from vehicles (10, 20, 30) involved in the irregular event.

4. Method according to any of the preceding claims, wherein in response to gathering or receiving the vehicle information, status information is requested from one or more vehicles (20).

5. Method according to any of the preceding claims, wherein the status information relates to a property of an occupant of the vehicle, a property of a load of the vehicle or a property of the vehicle (10, 20, 30).

6. Method according to claim 5, **characterized in that** the status information relating to the vehicle (10, 20, 30) comprises driving data such as speed, steering angle, brake activation, indicator activation, data on a selected driving mode and/or environmental settings.

7. Method according to any of the preceding claims, wherein the vehicle information comprises the time and/or location of the irregular event, changes in speed or direction of travel, end positions and/or direction of travel of individual vehicles (10, 20, 30) involved in the irregular event.

8. Method according to any of the preceding claims, wherein the recorded status information is cyclically deleted provided that no vehicle information is received or gathered.

9. Method according to any of the preceding claims, wherein the set of status information is stored in a blockchain.

10. Method for a vehicle within a V2X network in which the method is carried out according to claims 1-9, the method comprising the steps:
• gathering (S2001) status information relating to the vehicle (10, 20, 30),
• transmitting (S2002) the gathered status information to an infrastructure unit, a road side unit, RSU (50), or a server (100) of the V2X network by means of a first message in order to record in an anonymized form without a unique identifier assigning the status information to the associated vehicle,
• detecting (S2003) an irregular event involving the vehicle (10, 20, 30), and
• transmitting (S2004) vehicle information associated with the irregular event to an infrastructure unit, a road side unit, RSU (50), or a server (100) of the V2X network in order to assign a set of status information to a vehicle (10, 20, 30) involved in the irregular event based on a comparison of the status information and the vehicle information.

11. Method according to claim 10, wherein the status information is transmitted to the RSU (50) or to the server (100) in an anonymized form.

12. Method according to claim 10 or claim 11, wherein the vehicle information relates to another vehicle (10, 30).

13. Computer program containing instructions which, when carried out by a control unit (56) of an infrastructure unit, of a road side unit, RSU (50), or of a server (100), cause the latter to carry out the method according to any of claims 1 to 9, or containing instructions which, when carried out by a control unit (106) of a vehicle (10, 20, 30), cause the latter to carry out the method according to claim 10, claim 11 or claim 12.

14. Infrastructure unit, road side unit, RSU (50), or server (100) in a V2X network, comprising:
• a communication unit (52) for data communication within the V2X network,
• a storage unit (54) for recording data,
• a control unit (56) which is configured to:
∘ control the communication unit (52) in order to receive status information from a plurality of vehicles (10, 20, 30),
∘ record the received status information in the storage unit (54) in an anonymized form without a unique identifier assigning the status information to the associated vehicle,
∘ gather or receive vehicle information on vehicles (10, 20, 30) involved in an irregular event, and
∘ assign a set of status information to at least one of the vehicles (10, 20, 30) involved in the irregular event based on a comparison of the status information and the vehicle information.

15. Vehicle (10, 20, 30) in a V2X network comprising an infrastructure unit, road side unit, RSU (50), or server (100) according to claim 14, comprising:
• a communication unit (102) for data communication within the V2X network,
• a sensor unit (104) for gathering status information and vehicle information,
• a control unit (106) which is configured to:
∘ control the sensor unit (104) in order to gather status information relating to the vehicle (10, 20, 30) and vehicle information,
∘ control the communication unit (102) in order to transmit the gathered status information to an infrastructure unit, a Road Side Unit, RSU (50), and/or a server (100) of the V2X network by means of a first message,
∘ detect an irregular event involving the vehicle (10, 20, 30), and
∘ control the communication unit (102) in order to transmit vehicle information associated with the irregular event to the RSU (50) and/or to the server (100) of the V2X network in order to assign a set of status information to at least one of the vehicles (10, 20, 30) involved in the irregular event based on a comparison of the status information and the vehicle information.

## Revendications

1. Procédé permettant le stockage et l'évaluation d'informations d'état détectées à l'intérieur d'un réseau de véhicule à X, le procédé présentant les étapes consistant à :
• recevoir (S1001) des informations d'état provenant d'une pluralité de véhicules (10, 20, 30),
• enregistrer (S1002) les informations d'état reçues dans une unité de stockage (54) sous une forme anonymisée en renonçant à un identifiant unique qui associe les informations d'état au véhicule correspondant,
• détecter ou recevoir (S1003) des informations de véhicule concernant des véhicules (10, 20, 30) impliqués dans un événement irrégulier,
• associer (S1004) un ensemble d'informations d'état à l'un des véhicules (10, 20, 30) impliqués dans l'événement irrégulier à l'aide d'une comparaison des informations d'état aux informations de véhicule.

2. Procédé selon la revendication 1, dans lequel le procédé est exécuté au moins dans certaines sections dans une unité formant infrastructure, unité de bord de route (Road Side Unit), RSU (50), ou un serveur (100).

3. Procédé selon la revendication 1 ou 2, dans lequel les informations d'état concernent le fonctionnement de véhicules (10, 20, 30) pendant une période prédéterminée avant l'événement irrégulier et/ou sont reçues en provenance de véhicules (10, 20, 30) impliqués dans l'événement irrégulier.

4. Procédé selon l'une des revendications précédentes, dans lequel des informations d'état sont demandées à un ou plusieurs véhicules (20) en réponse à la détection ou à la réception des informations de véhicule.

5. Procédé selon l'une des revendications précédentes, dans lequel les informations d'état concernent une caractéristique d'un passager du véhicule, d'un chargement du véhicule ou du véhicule (10, 20, 30).

6. Procédé selon la revendication 5, **caractérisé en ce que** les informations d'état concernant le véhicule (10, 20, 30) présentent des données de conduite, telles que vitesse, angle de braquage, activation des freins, activation des clignotants, données concernant un mode de conduite sélectionné et/ou paramètres environnementaux.

7. Procédé selon l'une des revendications précédentes, dans lequel les informations de véhicule présentent le moment et/ou le lieu de l'événement irrégulier, des changements de vitesse ou de direction, des positions finales et/ou une direction de véhicules (10, 20, 30) individuels impliqués dans l'événement irrégulier.

8. Procédé selon l'une des revendications précédentes, dans lequel les informations d'état enregistrées sont effacées de manière cyclique pour autant qu'aucune information de véhicule n'est reçue ou détectée.

9. Procédé selon l'une des revendications précédentes, dans lequel l'ensemble d'informations d'état est stocké dans une chaîne de blocs.

10. Procédé d'un véhicule à l'intérieur d'un réseau de véhicule à X, dans lequel le procédé est mis en œuvre selon les revendications 1 à 9, le procédé présentant les étapes consistant à :
• détecter (S2001) des informations d'état concernant le véhicule (10, 20, 30),
• transmettre (S2002) les informations d'état détectées à une unité formant infrastructure, unité de bord de route (Road Side Unit), RSU (50), ou à un serveur (100) du réseau de véhicule à X au moyen d'un premier message pour l'enregistrement sous une forme anonymisée en renonçant à un identifiant unique qui associe les informations d'état au véhicule correspondant,
• déterminer (S2003) un événement irrégulier impliquant le véhicule (10, 20, 30), et
• transmettre (S2004) des informations de véhicule associées à l'événement irrégulier à une unité formant infrastructure, unité de bord de route (Road Side Unit), RSU (50), ou à un serveur (100) du réseau de véhicule à X pour permettre d'associer un ensemble d'informations d'état à un véhicule (10, 20, 30) impliqué dans l'événement irrégulier à l'aide d'une comparaison des informations d'état aux informations de véhicule.

11. Procédé selon la revendication 10, dans lequel les informations d'état sont transmises à la RSU (50) ou au serveur (100) sous une forme anonymisée.

12. Procédé selon la revendication 10 ou 11, dans lequel les informations de véhicule concernent un autre véhicule (10, 30).

13. Programme informatique contenant des instructions qui, lorsqu'elles sont exécutées par une unité de commande (56) d'une unité formant infrastructure, unité de bord de route (Road Side Unit), RSU (50), ou d'un serveur (100), l'amènent à exécuter le procédé selon l'une des revendications 1 à 9, ou contenant des instructions qui, lorsqu'elles sont exécutées par une unité de commande (106) d'un véhicule (10, 20, 30), l'amènent à exécuter le procédé selon la revendication 10, 11 ou 12.

14. Unité formant infrastructure, unité de bord de route (Road Side Unit), RSU (50), ou serveur (100) dans un réseau de véhicule à X, présentant :
• une unité de communication (52) pour la communication de données à l'intérieur du réseau de véhicule à X,
• une unité de stockage (54) pour l'enregistrement de données,
• une unité de commande (56) qui est configurée pour :
O commander l'unité de communication (52) pour la réception d'informations d'état d'une pluralité de véhicules (10, 20, 30),
O enregistrer les informations d'état reçues dans l'unité de stockage (54) sous une forme anonymisée en renonçant à un identifiant unique qui associe les informations d'état au véhicule correspondant,
∘ détecter ou recevoir des informations de véhicule concernant des véhicules (10, 20, 30) impliqués dans un événement irrégulier, et
∘ associer un ensemble d'informations d'état à au moins l'un des véhicules (10, 20, 30) impliqués dans l'événement irrégulier à l'aide d'une comparaison des informations d'état aux informations de véhicule.

15. Véhicule (10, 20, 30) dans un réseau de véhicule à X qui comprend une unité formant infrastructure, unité de bord de route (Road Side Unit), RSU (50), ou un serveur (100) selon la revendication 14, présentant :
• une unité de communication (102) pour la communication de données à l'intérieur du réseau de véhicule à X,
• une unité formant capteur (104) pour la détection des informations d'état et des informations de véhicule,
• une unité de commande (106) qui est configurée pour :
O commander l'unité formant capteur (104) pour détecter des informations d'état et des informations de véhicule concernant le véhicule (10, 20, 30),
O commander l'unité de communication (102) pour transmettre les informations d'état détectées à une unité formant infrastructure, unité de bord de route (Road Side Unit), RSU (50),
et/ou à un serveur (100) du réseau de véhicule à X au moyen d'un premier message,
O déterminer un événement irrégulier impliquant le véhicule (10, 20, 30), et
O commander l'unité de communication (102) pour transmettre des informations de véhicule associées à l'événement irrégulier à la RSU (50) et/ou au serveur (100) du réseau de véhicule à X pour associer un ensemble d'informations d'état à au moins l'un des véhicules (10, 20, 30) impliqués dans l'événement irrégulier à l'aide d'une comparaison des informations d'état aux informations de véhicule.
